# EUROPÄISCHE PATENTSCHRIFT

(11) **EP 1 021 327 B1**
(45) Veröffentlichungstag und Bekanntmachung des Hinweises auf die Patenterteilung: **29.05.2002**
(21) Anmeldenummer: 98948997.6
(22) Anmeldetag: 30.09.1998
(51) Int. Cl.: B60T 13/72, B60T 7/12, B60T 8/48, B60T 8/24

(54) **FAHRZEUGBREMSANLAGE EINES KRAFTFAHRZEUGES**
AUTOMOBILE BRAKE SYSTEM
SYSTEME DE FREINAGE D'AUTOMOBILE

(30) Priorität: 06.10.1997 DE 19744112
(43) Veröffentlichungstag der Anmeldung: 26.07.2000
(73) Patentinhaber: LUCAS INDUSTRIES PUBLIC LIMITED COMPANY, Solihull B90 4LA (GB)
(72) Erfinder: LINDEN, Christoph, D-56179 Vallendar (DE)
(74) Vertreter: Schmidt, Steffen J., Dipl.-Ing.
(86) Internationale Anmeldenummer: EP9806222
(87) Internationale Veröffentlichungsnummer: WO9917971

(56) Entgegenhaltungen:
- EP-A- 0 588 193
- EP-A- 0 819 591
- WO-A-96/14228
- WO-A-98/43857
- DE-A- 4 037 468
- DE-A- 4 324 205
- DE-A- 4 425 578
- DE-A- 4 427 247
- DE-A- 19 503 622
- DE-A- 19 547 111
- US-A- 3 871 497
- "ADJUSTABLE DEAD-STROKE IN BRAKING SYSTEM" RESEARCH DISCLOSURE, Nr. 388, August 1996, Seite 494 XP000635432

## Beschreibung

Die vorliegende Erfindung betrifft eine Fahrzeugbremsanlage eines Kraftfahrzeuges.

Insbesondere betrifft die vorliegende Erfindung eine Fahrzeugbremsanlage eines Kraftfahrzeuges mit einem elektronisch steuerbaren Bremskraftverstärker mit einer Unterdruckkammer und einer Druckkammer, die durch eine bewegliche Wand voneinander getrennt sind, einer Steuerventilanordnung, die mittels einer elektromagnetischen Betätigungseinrichtung betätigbar ist, und durch die eine Druckdifferenz zwischen der Druckund der Unterdruckkammer einstellbar ist, wobei die bewegliche Wand in Abhängigkeit von den Druckverhältnissen in der Unterdruckkammer und der Druckkammer ihre Position verändert und dabei einen Hauptbremszylinder betätigt, wobei die elektromagnetische Betätigungseinrichtung im Betrieb durch eine elektronische Steuereinheit mit Stromsignalen beschickt wird, die die elektronische Steuereinheit in Abhängigkeit von fahrdynamischen Zuständen oder externen Einflüssen erzeugt.

Solche Fahrzeugbremsanlagen sind z.B. durch die DE 43 24 205 A1 und US-A-3 871 497 bekannt.

Derartige Fahrzeugbremsanlagen werden für Kraftfahrzeuge eingesetzt, die mit Abstandsregelungen und Geschwindigkeitsregelungen, oder mit Kombinationen dieser beiden Regelungen (AbstandsRegelTempomaten) ausgestattet sind. Allerdings ist ein Problem dieser Anlagen, daß diese Regelungen relativ unzuverlässig sind, da zu viel Spiel, Leerwege oder toleranzbedingte Totwege für eine schnelle Regelung in der Fahrzeugbremsanlage vorhanden sind.

Dies hat zur Folge, daß Bremsweg "verschenkt" wird. Bei einer Fahrzeuggeschwindigkeit von 200 kmh und einer Fahrzeugbremsanlagen-bedingten Totzeit von nur 200 ms beträgt dieser "verschenkte" Bremsweg 11 m! Gegenüber einem Bremsweg von etwa 193 m (bei einer Verzögerung von 8 m/s²) sind dies etwa 6%. Außerdem kann die Regelung aufgrund von Spiel, Leerwegen oder toleranzbedingten Totwegen ein ungünstiges Einschwingverhalten oder auch ein Überschwingverhalten zeigen.

Zur Lösung dieser Probleme wird gemäß der Erfindung eine eingangs beschriebene Fahrzeugbremsanlage durch die Merkmale des kennzeichnenden Teils des Patentanspruchs 1 weitergebildet.

Die Erfindung berücksichtigt bzw. nutzt dabei die Reibung von Dichtungen und bewegten Komponenten an deren Lagerungen als Gegenkraft bzw. als Haltekraft. Damit wird erreicht, daß die durch die betätigte Steuerventilanordnung in eine spielfreie Stellung bewegten Komponenten in dieser Stellung auch gehalten werden, so daß bei einer einzuleitenden Bremsung bereits von dieser Stellung ausgegangen werden kann.

Gemäß einer bevorzugten Ausführungsform der Erfindung ist dabei die Fahrzeugbremsanlage dadurch weitergebildet, daß die die elektronische Steuereinheit zur Erfassung der fahrdynamischen Zustände oder externer Einflüsse oder Kombinationen davon mit Sensoren verbunden ist, die die Fahrzeuggeschwindigkeit, und/oder die Fahrzeugbeschleunigung/-verzögerung, und/oder den Abstand zum vorausfahrenden oder hinterherfahrenden Fahrzeug, und/oder den Schaltzustand der Geschwindigkeitsautomatik (Cruise Control), und/oder die Stellung der Drosselklappe, und/oder die Stellung des Gangwahlhebels oder des Automatikgetriebes, und/oder den Kraftstoff-Verbrauch, und/oder die Umgebungshelligkeit, und/oder die Tages-(uhr)zeit, und/oder die Berührung des Bremspedals durch der Fahrer, und/oder andere Signale erfassen, die für die Beurteilung der Wahrscheinlichkeit einer in Bälde erforderlichen Bremsung relevant sind.

Unter Zugrundelegung der Informationen aus diesen Sensoren kann die elektronische Steuereinheit ermitteln, ob die Einleitung einer Bremsung in nächster Zukunft wahrscheinlich ist.

In einer ersten Ausbaustufe werden die durch die elektronische Steuereinheit erzeugten Stromsignale so bemessen, daß sie die elektromagnetische Betätigungseinrichtung soweit ansteuern, daß Spiel, Leerwege oder toleranzbedingte Totwege in dem Bremskraftverstärker überwunden sind, ohne daß eine Betätigung des Hauptbremszylinders erfolgt.

In einer zweiten weiteren Ausbaustufe werden die durch die elektronische Steuereinheit erzeugten Stromsignale so bemessen, daß sie die elektromagnetische Betätigungseinrichtung soweit ansteuern, daß Spiel, Leerwege oder toleranzbedingte Totwege in dem Hauptbremszylinder überwunden sind, ohne daß eine Betätigung der Bremseinrichtungen an den Rädern des Kraftfahrzeuges erfolgt.

In einer weiteren Ausbaustufe werden die durch die elektronische Steuereinheit erzeugten Stromsignale so bemessen, daß sie die elektromagnetische Betätigungseinrichtung soweit ansteuern, daß Spiel, Leerwege oder toleranzbedingte Totwege in den Bremsleitungen, Ventilanordnungen und Bremseinrichtungen an den Rädern des Kraftfahrzeuges überwunden sind, ohne daß eine Betätigung der Bremseinrichtungen erfolgt.

Vorzugsweise werden die Überwindung von Spiel, Leerwegen oder toleranzbedingten Totwegen in dem Bremskraftverstärker, und/oder dem Hauptbremszylinder, und/oder den Bremsleitungen, Ventilanordnungen und Bremseinrichtungen an den Rädern des Kraftfahrzeuges durch entsprechende Sensoren erfaßt, die Rückmeldungs-signale für die elektronische Steuereinheit erzeugen.

Die elektronische Steuereinheit weist einen Rechner zur Verknüpfung der durch die Sensoren erfaßten Signale gemäß vorbestimmten Regeln und einen Speicher zum Abspeichern der vorbestimmten Regeln sowie von während des Betriebes der Fahrzeugbremsanlage gewonnenen Erfahrungswerten auf. Damit können fahrertypische Verhaltensmuster im Vorfeld einer Bremsung erkannt werden und für zukünftige Brems-Situationen ausgewertet werden.

In einer Ausführungsform der Erfindung sind die in dem Speicher abgespeicherten Erfahrungswerte Kombinationen von erfaßten Sensorsignalen sowie von Wahrscheinlichkeitswerten, mit denen beim Vorliegen der jeweiligen Kombination von erfaßten Sensorsignalen innerhalb eines Zeitintervalls in der Vergangenheit eine Bremsung ausgeführt wurde.

Damit können die durch die elektronische Steuereinheit erzeugten Stromsignale die elektromagnetische Betätigungseinrichtung in Abhängigkeit von vorliegenden Sensorsignalen im Vergleich zu in dem Speicher abgespeicherten Erfahrungswerten soweit ansteuern, daß mit ansteigender Wahrscheinlichkeit einer in Bälde einzuleitenden Bremsung Spiel, Leerwege oder toleranzbedingte Totwege zuerst in dem Bremskraftverstärker, dann in dem Hauptbremszylinder, und dann in den Bremsleitungen, Ventilanordnungen und Bremseinrichtungen an den Rädern des Kraftfahrzeuges überwunden werden, ohne daß eine Betätigung der Bremseinrichtungen erfolgt.

Durch diese stufenweise Überwindung der Leerwege kann die Fahrzeugbremsanlage sukzessive für eine Bremsung in Abhängigkeit von externen Einflüssen vorbereitet werden, so daß dann in dem Augenblick, in dem die Bremsung durch den Fahrer tatsächlich durch Betätigen des Bremspedals gewollt ist, die Bremse sofort "greifen" kann, ohne daß noch Fahrzeugbremsanlagen-bedingte Verzögerungen auftreten.

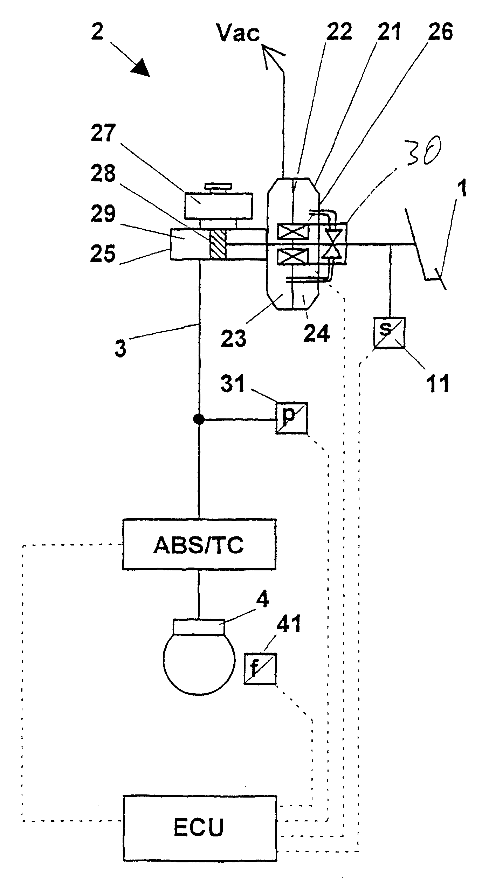

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnung erläutert.

Die Zeichnung zeigt eine Fahrzeugbremsanlage eines Kraftfahrzeuges bei der ein Bremspedal 1 dazu dient, über ein Betätigungselement eine Bremsdruckgebereinheit 2 zu betätigen. Die Bremsdruckgebereinheit 2 weist einen Bremszylinder 25 auf, in dem ein Kolben 28 eine Druckkammer 29 bildet. Die Druckkammer 29 wird von einem Reservoir 27 mit Bremsfluid versorgt. Von der Druckkammer 29 führt eine Bremsleitung 3 zu einer Radbremse 4 des Fahrzeugs.

In der Bremsleitung 3 ist eine Antiblockier- und/oder Antriebsschlupfregeleinrichtung ABS/TC zwischen der Bremsdruckgebereinheit 2 und der Radbremse 4 angeordnet. Die Antiblokkier- und/oder Antriebsschlupfregeleinrichtung ABS/TC umfaßt in bekannter Weise unter anderem Ventil- und Pumpenanordnungen, die von einer elektronischen Steuereinheit ECU angesteuert werden, um den Druck in der Radbremse zu modulieren. Dies geschieht in Abhängigkeit von dem Drehverhalten eines der Radbremse 4 zugeordneten Fahrzeugrades, das mittels eines Sensors 41 erfaßt und der elektronischen Steuereinheit ECU zugeführt wird.

Die Bremsdruckgebereinheit weist zur Verstärkung der vom Fahrer über das Bremspedal 1 eingeleiteten Betätigungskraft einen Bremskraftverstärker 21 auf. Eine bewegliche Wand 22 unterteilt den Bremskraftverstärker 21 in eine Unterdruckkammer 23 und eine Druckkammer 24. Zur Erzeugung des Unterdrucks ist die Unterdruckkammer 23 an eine nicht näher dargestellte Unterdruckquelle Vac angeschlossen. Bei einem mit einem ottomotor ausgerüsteten Fahrzeug steht das im Ansaugrohr prinzipbedingt erzeugte Vakuum zur Verfügung. Dagegen ist bei einem mit einem Diesel- oder Elektromotor angetriebenen Fahrzeug eine zusätzliche Vakuumpumpe als Unterdruckquelle Vac notwendig. Bei einer Betätigung des Bremspedals 1 funktioniert der Bremskraftverstärker in bekannter Weise dadurch, daß die Druckkammer 24 mit Atmosphärendruck beaufschlagt wird, so daß an der beweglichen Wand 22 eine Druckdifferenz wirkt, die die am Bremspedal 1 eingeleitete Betätigungskraft unterstützt. Im unbetätigtem Zustand sind die Unterdruckkammer 23 und die Druckkammer 24 miteinander verbunden und somit druckausgeglichen, so daß an der beweglichen Wand 22 keine Druckdifferenz wirksam ist.

Der Bremskraftverstärker 21 ist über eine durch eine Elektromagnetanordnung 26 betätigbare Steuerventilanordnung 30 auch elektronisch steuerbar. Die elektronische Steuerbarkeit des Bremskraftverstärkers 21 ermöglicht es Bremsvorgänge auch automatisch, also unabhängig von einer Betätigung des Bremspedals 1 auszuführen. Damit ist eine Druckdifferenz zwischen der Druck- und der Unterdruckkammer einstellbar, wobei die bewegliche Wand in Abhängigkeit von den Druckverhältnissen in der Unterdruckkammer und der Druckkammer ihre Position verändert und dabei den Bremszylinder betätigt.

Dies kann zur Ausführung beispielsweise einer Antriebsschlupfregelung, Fahrdynamikregelung oder Abstandsregelung dienen. Eine Sensoreinrichtung 11 ist vorgesehen, um mit der Betätigung des Bremspedals 1 in Beziehung stehende Größen, wie beispielsweise Pedalweg, Pedalkraft oder Pedalbetätigungsgeschwindigkeit, zur Auswertung in der elektronischen Steuereinhei ECU zu erfassen, um auch Bremsungen in Notsituationen, wobei zum Beispiel die Überschreitung einer bestimmten Pedalbetätigungsgeschwindigkeit als Kriterium dient, auszuführen.

Weitere Sensoren, die mit der elektronischen Steuereinheit verbunden sind, dienen ebenfalls zur Erfassung der fahrdynamischen Zustände oder externer Einflüsse auf das Fahrzeug bzw. die Fahrzeugbremsanlage. Insbesondere sind dies Sensoren, die die Fahrzeuggeschwindigkeit, die Fahrzeugbeschleunigung/-Verzögerung, den Abstand zum vorausfahrenden oder hinterherfahrenden Fahrzeug, den Schaltzustand der Geschwindigkeitsautomatik (Cruise Control), und/oder die Stellung der Drosselklappe, die Stellung des Gangwahlhebels oder des Automatikgetriebes, den Kraftstoff-Verbrauch, die Umgebungshelligkeit, die Tages-(uhr)zeit, die Temperatur an unterschiedlichen Stellen der Fahrzeugbremsanlage, oder andere Signale erfassen, die für die Beurteilung der Wahrscheinlichkeit einer in Bälde erforderlichen Bremsung relevant sind.

Die elektronische Steuereinheit erzeugt bei Vorliegen bestimmter fahrdynamischer Zustände oder externer Einflüsse auf die Fahrzeugbremsanlage oder Kombinationen davon, die die Betätigung des Hauptbremszylinders innerhalb eines vorbestimmten Zeitintervalls mit einer vorbestimmten Wahrscheinlichkeit erforderlich machen, Ansteuersignale für die elektromagnetische Betätigungseinrichtung, so daß die Steuerventilanordnung in einem Maße betätigt wird, daß zumindest in einem Teil der Fahrzeugbremsanlage vorhandenes Spiel, Leerwege oder toleranzbedingte Totwege überwunden sind, ohne daß eine Betätigung des Hauptbremszylinders oder weiterer nachfolgender Komponenten in der Fahrzeugbremsanlage (Bremsleitungen, Ventilanordnungen, Bremseinrichtungen an den Rädern des Kraftfahrzeuges, etc.) erfolgt.

Die elektronische Steuereinheit enthält einen Rechner zur Verknüpfung der durch die Sensoren erfaßten Signale gemäß vorbestimmten Regeln, und einen Speicher zum Abspeichern der vorbestimmten Regeln sowie von während des Betriebes der Fahrzeugbremsanlage gewonnenen Erfahrungswerten.

Die in dem Speicher abgespeicherten Erfahrungswerte sind Kombinationen von erfaßten Sensorsignalen sowie von Wahrscheinlichkeitswerten, mit denen beim Vorliegen der jeweiligen Kombination von erfaßten Sensorsignalen innerhalb eines Zeitintervalls in der Vergangenheit eine Bremsung ausgeführt wurde. Diese Erfahrungswerte können sowohl spezifisch für das jeweilige Kraftfahrzeug sein, so daß das Fahrerverhalten einfließt. Es können jedoch auch (werkseitig eingeführte)) allgemeine Erfahrungswerte mit dem jeweiligen Fahrzeugtyp abgelegt sein.

## Patentansprüche

1. Fahrzeugbremsanlage eines Kraftfahrzeuges, bei der Bremseinrichtungen an dessen Rädern über einen Hauptbremszylinder mit Druck beaufschlagbar sind, mit einem elektronisch steuerbaren Bremskraftverstärker (21) mit
- einer Unterdruckkammer (23) und einer Druckkammer (24), die durch eine bewegliche Wand (22) voneinander getrennt sind,
- einer Steuerventilanordnung (30), die mittels einer elektromagnetischen Betätigungseinrichtung (26) betätigbar ist und durch die eine Druckdifferenz zwischen der Druck- und der Unterdruckkammer einstellbar ist, wobei die bewegliche Wand (22) in Abhängigkeit von den Druckverhältnissen in der Unterdruckkammer (23) und der Druckkammer (24) ihre Position verändert und dabei einen Hauptbremszylinder betätigt, wobei
- die elektromagnetische Betätigungseinrichtung (26) im Betrieb durch eine elektronische Steuereinheit mit Stromsignalen beschickt wird, die die elektronische Steuereinheit in Abhängigkeit von fahrdynamischen Zuständen oder externen Einflüssen erzeugt, die mit der elektrischen Steuereinheit verbundene Sensoren erfassen, und
- bei Vorliegen bestimmter fahrdynamischer Zustände oder externer Einflüsse oder Kombinationen davon, die die Betätigung des Hauptbremszylinders innerhalb eines vorbestimmten Zeitintervalls mit einer vorbestimmten Wahrscheinlichkeit erforderlich machen, die elektronische Steuereinheit Stromsignale für die elektromagnetische Betätigungseinrichtung erzeugt, so daß die Steuerventilanordnung in einem Maße betätigt wird, daß zumindest in dem Bremskraftverstärker vorhandenes Spiel, Leerwege oder toleranzbedingte Totwege überwunden sind,
**dadurch gekennzeichnet, daß**
- keine Betätigung der Bremseinrichtungen erfolgt,
- die elektronische Steuereinheit
-- einen Rechner zur Verknüpfung der durch die Sensoren erfaßten Signale gemäß vorbestimmten Regeln, und
-- einen Speicher zum Abspeichern der vorbestimmten Regeln sowie von während des Betriebes der Fahrzeugbremsanlage gewonnenen Erfahrungswerten aufweist, und
- die in dem Speicher abgespeicherten Erfahrungswerte Kombinationen von erfaßten Sensorsignalen sowie von Wahrscheinlichkeitswerten sind, mit denen beim Vorliegen der jeweiligen Kombination von erfaßten Sensorsignalen innerhalb eines Zeitintervalls in der Vergangenheit eine Bremsung ausgeführt wurde.

2. Fahrzeugbremsanlage nach Anspruch 1, **dadurch gekennzeichnet, daß**
- die elektronische Steuereinheit zur Erfassung der fahrdynamischen Zustände oder externer Einflüsse oder Kombinationen davon mit Sensoren verbunden ist, die
-- die Fahrzeuggeschwindigkeit, und/oder
-- die Fahrzeugbeschleunigung/-verzögerung, und/oder
-- den Abstand zum vorausfahrenden oder hinterherfahrenden Fahrzeug, und/oder
-- den Schaltzustand der Geschwindigkeitsautomatik (Cruise Control), und/oder
-- die Stellung der Drosselklappe, und/oder
-- die Stellung des Gangwahlhebels oder des Automatikgetriebes, und/oder
-- den Kraftstoff-Verbrauch, und/oder
-- die Umgebungshelligkeit, und/oder
-- die Tages-(uhr)zeit, und/oder
-- die Berührung des Bremspedals durch der Fahrer, und/oder
-- andere Signale erfassen,
die für die Beurteilung der Wahrscheinlichkeit einer in Bälde erforderlichen Bremsung relevant sind.

3. Fahrzeugbremsanlage nach Anspruch 1 oder 2, **dadurch gekennzeichnet, daß**
- die durch die elektronische Steuereinheit erzeugten Stromsignale die elektromagnetische Betätigungseinrichtung soweit ansteuern, daß Spiel, Leerwege oder toleranzbedingte Totwege auch in dem Hauptbremszylinder überwunden sind.

4. Fahrzeugbremsanlage nach Anspruch 1, 2 oder 3, **dadurch gekennzeichnet, daß**
- die durch die elektronische Steuereinheit erzeugten Stromsignale die elektromagnetische Betätigungseinrichtung soweit ansteuern, daß Spiel, Leerwege oder toleranzbedingte Totwege auch in den Bremsleitungen, Ventilanordnungen und Bremseinrichtungen an den Rädern des Kraftfahrzeuges überwunden sind, ohne daß eine Betätigung der Bremseinrichtungen erfolgt.

5. Fahrzeugbremsanlage nach Anspruch 1, 2, 3 oder 4, **dadurch gekennzeichnet, daß**
- die Überwindung von Spiel, Leerwegen oder toleranzbedingten Totwegen in
-- dem Bremskraftverstärker, und/oder
-- dem Hauptbremszylinder, und/oder
-- den Bremsleitungen, Ventilanordnungen und Bremseinrichtungen an den Rädern des Kraftfahrzeuges
durch Sensoren erfaßt werden, die Rückmeldungs-Signale für die elektronische Steuereinheit erzeugen.

6. Fahrzeugbremsanlage nach Anspruch 1, 2, 3, 4 oder 5, **dadurch gekennzeichnet, daß**
- die durch die elektronische Steuereinheit erzeugten Stromsignale die elektromagnetische Betätigungseinrichtung in Abhängigkeit von vorliegenden Sensorsignalen im Vergleich zu in dem Speicher abgespeicherten Erfahrungswerten soweit ansteuern, daß mit ansteigender Wahrscheinlichkeit einer in Bälde einzuleitenden Bremsung Spiel, Leerwege oder toleranzbedingte Totwege zuerst in dem Bremskraftverstärker, dann in dem Hauptbremszylinder, und dann in den Bremsleitungen, Ventilanordnungen und Bremseinrichtungen an den Rädern des Kraftfahrzeuges überwunden werden, ohne daß eine Betätigung der Bremseinrichtungen erfolgt.

## Claims

1. A vehicle brake system of a motor vehicle, wherein brake means at the wheels thereof are adapted to be subjected to pressure via a master cylinder, with an electronically controllable brake booster (21), comprising
- a vacuum chamber (23) and a pressure chamber (24) which are separated from each other by a movable wall (22),
- a control valve arrangement (30) which can be actuated by way of an electromagnetic actuation means (26) and by means of which a pressure difference between the pressure chamber and the vacuum chamber is adjustable, with the movable wall (22) changing its position as a function of the pressure conditions in the vacuum chamber (23) and in the pressure chamber (24), thereby actuating a master cylinder, with
- the electromagnetic actuation means (26) being supplied with current signals by an electronic control unit during operation, which the electronic control unit generates as a function of driving dynamics conditions or external influences, which are sensed by sensors connected with the electric control unit, and
- upon the presence of certain driving dynamics conditions or external influences, or combinations thereof, which render the actuation of the master cylinder necessary with a predetermined probability within a predetermined time interval, the electronic control unit generates control signals for the electromagnetic actuation means, so that the control valve arrangement is actuated to such a degree that play, backlash, or tolerance-related free travel in at least the brake booster is overcome, **characterised in that**
- no actuation of the brake means takes place,
- the electronic control unit comprises
-- a computer for combining the signals sensed by the sensors in accordance with predetermined rules, and
-- a memory for storing the predetermined rules as well as empirical values obtained during the operation of the vehicle brake system, and
- the empirical values stored in the memory are combinations of sensed sensor signals as well as of probability values by means of which upon the respective combination of sensed sensor signals being present, a braking operation was carried out within a time interval in the past.

2. The vehicle brake system according to Claim 1, **characterised in that**
- the electronic control unit is connected with sensors for sensing the driving dynamics conditions or external influences or combinations thereof, which sense
-- the vehicle speed, and/or
-- the vehicle acceleration/deceleration, and/or
-- the distance from the vehicle driving in front or following, and/or
-- the shift condition of the automatic speed control (cruise control), and/or
-- the position of the throttle, and/or
-- the position of the gearshift lever or of the automatic transmission, and/or
-- the fuel consumption, and/or
-- the brightness of the environment, and/or
-- the time of day, and/or
-- the contact of the brake pedal by the driver, and/or
-- other signals
which are relevant for the assessment of the probability of a braking operation required in the immediate future.

3. The vehicle brake system according to Claim 1 or 2, **characterised in that**
- the current signals generated by the electronic control unit enable the electromagnetic actuation means to such an extent, that play, backlash, or tolerance-related free travel are overcome in the master cylinder as well.

4. The vehicle brake system according to Claim 1, 2, or 3, **characterised in that**
- the current signals generated by the electronic control unit enable the electromagnetic actuation means to such an extent that play, backlash, or tolerance-related free travel are overcome in the brake lines, valve arrangements, and brake means at the wheels of the vehicle as well without an actuation of the brake means taking place.

5. The vehicle brake system according to Claim 1, 2, 3, or 4, **characterised in that**
- the overcoming of play, backlash, or tolerance-related free travel in
-- the brake booster, and/or
-- the master cylinder, and/or
-- the brake lines, valve arrangements, and brake means at the wheels of the vehicle
is sensed by sensors which generate feedback signals for the electronic control unit.

6. The vehicle brake system according to Claim 1, 2, 3, 4, or 5, **characterised in that**
- the current signals generated by the electronic control unit enable the electromagnetic actuation means as a function of present sensor signals in comparison with the empirical values stored in the memory to such an extent, that with increasing probability of a braking operation to be initiated in the immediate future, play, backlash, or tolerance-related free travel is overcome at first in the brake booster, then in the master cylinder, and then in the brake lines, valve arrangements and brake means at the wheels of the vehicle, without an actuation of the brake means taking place.

## Revendications

1. Système de freinage de véhicule automobile dans lequel des dispositifs de freinage disposés aux roues de celui-ci sont alimentés en pression par un maître cylindre de frein, comprenant un servofrein (21) à commande électronique comprenant
- une chambre de dépression (23) et une chambre de pression (24) qui sont séparées l'une de l'autre par une paroi mobile (22),
- un dispositif de vanne de commande (30) qui peut être actionné au moyen d'un dispositif de commande électromagnétique (26) et au moyen duquel on peut régler une différence de pression entre les chambres de dépression et de pression, la paroi mobile (22) modifiant sa position en fonction des rapports de pressions dans la chambre de dépression (23) et la chambre de pression (24) et actionnant ce faisant un maître cylindre de frein, dans lequel
- le dispositif de commande électromagnétique (26) est alimenté en service par une unité de commande électronique en signaux électriques que génère l'unité de commande électronique en fonction des conditions de dynamique de conduite ou d'influences externes que relèvent des capteurs reliés à l'unité de commande électrique, et
- en présence de certaines conditions de dynamique de conduite ou influences externes ou de combinaisons de celles-ci qui rendent l'actionnement du maître cylindre de frein nécessaire dans un intervalle de temps prédéterminé avec une probabilité prédéterminée, l'unité de commande électronique génère des signaux électriques pour le dispositif de commande électromagnétique de telle façon que le dispositif de vanne de commande soit actionné dans une mesure surmontant au moins le jeu existant ou des courses à vide dues ou non à des tolérances existant dans le servofrein,
**caractérisé en ce que**
- aucun actionnement des dispositifs de freinage n'a lieu,
- l'unité de commande électronique présente
-- un ordinateur pour combiner les signaux relevés par les capteurs selon des règles prédéterminées, et
-- une mémoire pour enregistrer les règles prédéterminées ainsi que des valeurs empiriques acquises pendant le fonctionnement du système de freinage de véhicule, et
- les valeurs empiriques enregistrées dans la mémoire sont des combinaisons de signaux de capteurs relevés ainsi que de valeurs de probabilité avec lesquelles en présence de la combinaison respective de signaux de capteurs relevés un freinage a été exécuté à l'intérieur d'un intervalle de temps dans le passé.

2. Système de freinage de véhicule selon la revendication 1, **caractérisé en ce que**
- l'unité de commande électronique servant au relevé des conditions de dynamique de conduite ou d'influences externes ou de combinaisons celles-ci est reliée à des capteurs qui relèvent
-- la vitesse du véhicule et / ou
-- l'accélération / la décélération du véhicule et / ou
-- la distance au véhicule précédent ou suivant et / ou
-- l'état du système de régulation automatique de vitesse (Cruise Control) et / ou
-- la position du papillon des gaz et / ou
-- la position du levier de vitesse ou de la boîte de vitesses automatique et / ou
-- la consommation d'essence et / ou
-- la luminosité de l'environnement et / ou
-- l'heure et / ou
-- le contact de la pédale de frein par le conducteur et / ou
-- d'autres signaux,
qui sont pertinents pour estimer la probabilité d'un freinage nécessaire dans un avenir proche.

3. Système de freinage de véhicule selon la revendication 1 ou 2, **caractérisé en ce que**
- les signaux électriques générés par l'unité de commande électronique commandent le dispositif de commande électromagnétique dans une telle mesure que le jeu ou des courses à vide dues ou non à des tolérances soient aussi surmontés dans le maître cylindre de frein.

4. Système de freinage de véhicule selon l'une quelconque des revendications 1, 2 ou 3, **caractérisé en ce que**
- les signaux électriques générés par l'unité de commande électronique commandent le dispositif d'actionnement électromagnétique dans une mesure telle que le jeu ou des courses à vide dues ou non à des tolérances soient aussi surmontés dans les conduites de frein, les dispositifs de vannes et les dispositifs de freinage aux roues du véhicule automobile sans qu'un actionnement des systèmes de freinage ait lieu.

5. Système de freinage de véhicule selon l'une quelconque des revendications 1, 2, 3 ou 4, **caractérisé en ce que**
- le franchissement d'un jeu ou de courses à vide dues ou non à des tolérances dans
-- le servofrein et / ou
-- le maître cylindre de frein et / ou
-- les conduits de freinage, les dispositifs de vannes et les systèmes de freinage aux roues du véhicule automobile
est relevé par des capteurs qui génèrent des signaux d'information en retour pour l'unité de commande électronique.

6. Système de freinage de véhicule selon l'une quelconque des revendications 1, 2, 3, 4 ou 5, **caractérisé en ce que**
- les signaux électriques générés par l'unité de commande électronique commandent le dispositif de commande électromagnétique en fonction de signaux de capteur présents par comparaison avec des valeurs empiriques enregistrées dans la mémoire dans une mesure telle qu'avec l'augmentation de la probabilité d'un freinage à commencer dans un avenir immédiat un jeu existant ou des courses à vide dues ou non à des tolérances soient surmontés d'abord dans le servofrein puis dans le maître cylindre de frein et ensuite dans les conduits de freinage, les dispositifs de vannes et les systèmes de freinage aux roues de l'automobile, sans qu'un actionnement des systèmes de freinage ait lieu.
